# EUROPEAN PATENT APPLICATION

(11) **EP 4 826 876 A1**
(43) Date of publication of application: **21.10.2026**
(21) Application number: 24928142.9
(22) Date of filing: 13.11.2024
(51) Int. Cl.: H01M 50/244, H01M 50/249, H01M 50/258, H01M 50/262

(54) **BATTERY MODULE, BATTERY, AND ELECTRIC DEVICE**

(30) Priority: 04.03.2024 CN 202420412297 U
(71) Applicant: Contemporary Amperex Technology Co., Limited, Ningde, Fujian 352100 (CN)
(72) Inventor: DU, Shiyu, Ningde, Fujian 352100 (CN); CHEN, Renyu, Ningde, Fujian 352100 (CN); WU, Jinwu, Ningde, Fujian 352100 (CN)
(74) Representative: Kraus & Lederer PartGmbB
(86) International application number: PCT/CN2024/131755
(87) International publication number: WO 2025/185213

(57) **Abstract**

The present application relates to the technical field of batteries, and provides a battery module, a battery, and an electric device. The battery module comprises battery cells, end plates, and side plates. Each end plate comprises an end plate body and an insertion structure, the end plate body defines a first surface, and the first surface extends in the length direction and the width direction of the end plate; the insertion structure is formed on the first surface, insertion grooves are respectively formed in the two ends of the insertion structure in the length direction, and the insertion grooves extend in the width direction; and each side plate comprises a bent part, and the bent part is inserted into the corresponding insertion groove.

## Description

### CROSS-REFERENCE TO RELATED APPLICATIONS

The present application claims priority to Chinese Patent Application No. 202420412297.1, filed on March 4, 2024 and entitled "BATTERY MODULE, BATTERY, AND POWER CONSUMING APPARATUS", which is incorporated herein by reference in its entirety.

### TECHNICAL FIELD

The present application relates to the technical field of batteries, and in particular, to a battery module, a battery, and a power consuming apparatus.

### BACKGROUND

Energy conservation and emission reduction are the key to sustainable development of the automobile industry, and electric vehicles have become an important part of sustainable development of the automobile industry due to their advantages of energy conservation and environment protection. For the electric vehicles, battery technology is an important factor related to the development thereof.

In a production process of some batteries, multiple battery cells need to be assembled to form a battery module, and then multiple battery modules are assembled to form a battery. How to optimize a battery module is an important direction in the research of a battery production process.

### SUMMARY

The present application is intended to solve at least one of the technical problems existing in the background art. For this purpose, an objective of the present application is to provide end plates of a battery case, a battery case, a battery, and a power consuming apparatus, to improve connection strength between the end plates and side plates of the battery case.

Embodiments in a first aspect of the present application provide a battery module, including battery cells, end plates, and side plates. Each end plate includes an end plate body and an insertion structure. The end plate body defines a first surface. The first surface extends along a length direction and a width direction of the end plate. The insertion structure is formed on the first surface. An insertion groove is formed in each of two ends of the insertion structure in the length direction. The insertion groove extends along the width direction. A side plate includes a bent part. The bent part is inserted into the insertion groove.

In the technical solutions of the embodiments of the present application, the first surface is defined on the end plate body, and the insertion grooves are formed in the insertion structure formed on the first surface, so that the bent parts of the side plates of the battery case can be inserted into the insertion grooves, and the connection strength between the end plates and the side plates of the battery case can be improved. In addition, the insertion grooves can limit the positions of the bent parts of the side plates, to prevent the bent parts of the side plates from warping and ensure an assembly gap between battery modules.

In some embodiments, along a thickness direction of the end plate, a width of the insertion groove is greater than a sum of a thickness of the bent part of the side plate and a first predetermined value, and is less than a sum of the thickness of the bent part of the side plate and a second predetermined value. The first predetermined value is less than the second predetermined value. Along the thickness direction of the end plate, the width of the insertion groove is greater than the sum of the thickness of the bent part of the side plate and the first predetermined value and is less than the sum of the thickness of the bent part of the side plate and the second predetermined value, so that after the bent part of the side plate is inserted into and assembled with the insertion groove, the bent part of the side plate does not interfere with the insertion groove, and meanwhile, the bent part of the side plate is not prone to separating from the insertion groove.

In some embodiments, along the length direction of the end plate, a depth of the insertion groove is less than a dimension of the bent part of the side plate in the length direction. Along the length direction of the end plate, the depth of the insertion groove is less than the dimension of the bent part of the side plate in the length direction, so that the bent part of the side plate can be inserted into the insertion groove more easily, and an assembly process between the side plate and the end plate is therefore simplified.

In some embodiments, the insertion structure includes a second surface facing away from the end plate body. The insertion groove includes a side wall surface facing the first surface. A maximum distance between the second surface and the side wall surface is greater than or equal to a predetermined multiple of the thickness of the bent part of the side plate. The maximum distance between the second surface and the side wall surface of the insertion groove facing the first surface is set to be greater than or equal to the predetermined multiple of the thickness of the bent part of the side plate, so that the structural strength of the insertion groove can be improved, and the insertion groove is not prone to deformation.

In some embodiments, a first chamfer is formed at an end of the side wall surface along the length direction of the end plate. The first chamfer is formed at the end of the side wall surface, so that the side plate can be more easily inserted into the insertion groove, and the probability of abnormal insertion is reduced.

In some embodiments, a second chamfer is formed at each of two ends of the first surface in the length direction, and a radius of the second chamfers is greater than a bending radius of the bent part of the side plate. The second chamfer is formed at each of the two ends of the first surface in the length direction, and the radius of the second chamfer is greater than the bending radius of the bent part of the side plate, so that the bent part of the side plate closely fits the end plate body, and the side plate can be more easily connected to the end plate.

In some embodiments, a plurality of shaped cavities are formed in the end plate. The plurality of shaped cavities are formed in the end plate, so that a weight of the end plate can be reduced, and the end plate can be conveniently connected to a base of the battery case.

In some embodiments, the bent part includes a first region and a second region connected to the first region. The second region is inserted into the insertion groove formed in the end plate. The first region is connected to the first surface of the end plate body by welding. By connecting the first region of the bent part to the first surface of the end plate body by welding, the first region is completely a weldable region, so that an area of the weldable region can be enlarged, and a welding seam formed in a welding process has high compatibility with deviation or inclination, welded connection is facilitated, and the connection reliability between the side plate and the end plate is improved.

In some embodiments, a welding seam extending along the width direction of the end plate is formed when the first region is welded to the first surface. A dimension of the welding seam is less than a width of the first region along the length direction of the end plate, and the dimension of the welding seam is less than a dimension of the first region along the width direction of the end plate. The dimension of the welding seam is less than the width of the first region along the length direction of the end plate, and the dimension of the welding seam is less than the dimension of the first region along the width direction of the end plate, so that space can be reserved for the welding seam in the length direction and the width direction of the end plate, the welding seam cannot be higher than the end plate or be wider than the end plate. The probability that the dimensions of the battery case in the length direction and the width direction are increased is reduced.

Embodiments in a second aspect of the present application provide a battery, including the battery module in any one of the foregoing embodiments and a case for accommodating the battery module.

Embodiments in a third aspect of the present application provide a power consuming apparatus, including the battery in the foregoing embodiment. The battery is used for providing electric energy.

The above description is only an overview of the technical solutions of the present application. In order to understand the technical means of the present application more clearly such that it can be implemented according to the content of the specification, and to make the aforementioned and other objectives, features, and advantages of the present application more apparent, specific implementations of the present application are listed below.

### BRIEF DESCRIPTION OF THE DRAWINGS

In the accompanying drawings, unless otherwise specified, the same reference numerals throughout multiple accompanying drawings represent the same or similar components or elements. These accompanying drawings may not necessarily be drawn to scale. It should be understood that these accompanying drawings only depict some implementations disclosed in the present application and should not be construed as limiting the scope of the present application. In order to provide a clearer explanation of the technical solutions of the embodiments of the present application, a brief introduction will be given to the accompanying drawings required in the embodiments of the present application. It is evident that the accompanying drawings described below are only some embodiments of the present application. For those of ordinary skill in the art, other drawings can be obtained based on these accompanying drawings without any creative effort.
FIG. 1 is a schematic diagram of an end plate of a battery module according to some embodiments of the present application;
FIG. 2 is a top view of the end plate of the battery module according to some embodiments of the present application;
FIG. 3 is a schematic diagram of connection between the end plate and a side plate of the battery module according to some embodiments of the present application; and
FIG. 4 is a partially enlarged view of FIG. 3.

### Description of reference numerals:

100 - End plate; 110 - End plate body; 120 - First surface; 130 - Insertion structure; 140 - Insertion groove; 150 - Second surface; 160 - First chamfer; 170 - Second chamfer; 180 - Shaped cavity; 190 - Side wall surface;
200 - Side plate; 210 - Bent part; 211 - First region; 212 - Second region; 220 - Welding seam;
X - Length direction of the end plate; Y - Width direction of the end plate; and Z - Thickness direction of the end plate.

### DETAILED DESCRIPTION

Embodiments of the technical solutions of the present application will be described in detail below with reference to the accompanying drawings. The following embodiments are only used to describe the technical solutions of the present application more explicitly, and are thus only interpreted as examples, rather than being used to limit the protection scope of the present application.

Unless otherwise defined, the meanings of all technical and scientific terms used herein are the same as those usually understood by those skilled in the art to which the present application belongs. The terms used herein are merely intended to describe specific embodiments, but are not intended to limit the present application. The terms "include" and "comprise" and any variants thereof in the specification and claims of the present application and in the description of the accompanying drawings are intended to cover non-exclusive inclusion.

In the description of the embodiments of the present application, the technical terms "first", "second", and the like are only used to distinguish different objects, and should not be understood as indicating or implying relative importance or implying the number, a specific order, or a primary and secondary relationship of technical features indicated. In the description of the embodiments of the present application, "a plurality of" means two or more, unless otherwise explicitly and specifically defined.

The term "embodiment" mentioned herein means that a particular feature, structure, or characteristic described with reference to an embodiment may be included in at least one embodiment of the present application. The term appearing at different positions of the specification may not necessarily refer to the same embodiment or an independent or alternative embodiment that is mutually exclusive with other embodiments. Those skilled in the art explicitly or implicitly understand that the embodiments described herein may be combined with other embodiments.

In the description of the embodiments of the present application, the term "and/or" describes only an association relationship for describing associated objects and represents that three relationships may be present. For example, A and/or B may represent presence of three cases: A alone, both A and B, and B alone. Furthermore, the character "/" herein generally indicates an "or" relationship between associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, orientation or position relationships indicated by technical terms "center", "longitudinal", "lateral", "length", "width", "thickness", "upper", "lower", "front", "rear", "left", "right", "vertical" "horizontal", "top", "bottom", "inner", "outer", "clockwise", "counterclockwise", "axial", "radial", "circumferential", or the like are based on the orientation or position relationships shown in the accompanying drawings, and are only for the convenience of describing the embodiments of the present application and simplifying the description, rather than indicating or implying that an apparatus or element referred to must have the specific orientation or be constructed and operated in the specific orientation, and therefore cannot be understood as limitations to the embodiments of the present application.

In the description of the embodiments of the present application, unless otherwise explicitly specified and limited, the technical terms "mount", "connect", "couple", "fix", and the like should be understood in a broad sense, which, for example, may refer to a fixed connection, a detachable connection, or an integral connection; a mechanical connection or an electrical connection; a direct connection or an indirect connection via an intermediate medium; or a communication between the insides of two elements or an interaction relationship between two elements. For those of ordinary skill in the art, the specific meanings of the above terms in the embodiments of the present application may be interpreted according to specific situations.

At present, from the perspective of market development, application of power batteries becomes increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. With continuously increasing application of the power batteries, the market demand is also constantly expanding.

In an assembly process of a battery, battery cells coated with an adhesive on two front faces are sequentially stacked, with end plates being arranged at two ends of the stacked battery cells, and side plates being arranged at two sides, so that the end plates and the side plates enclose the battery cells to form a battery module. To improve the vibration resistance stability of the battery module, a sufficient amount of adhesive needs to be applied to the two front faces of the battery cells, the dimensions of the battery are adjusted to be acceptable by using a pressable clamp, and then the end plates and the side plates are fixed.

During the use of the battery, the battery module needs to ensure that the end plates and the side plates are fixed and satisfy certain strength requirements (for example, instantaneous strength capability when the battery is impacted, fatigue resistance capability of the battery during long-term vibration, and capability of the battery to resist expansion force in charging and discharging of the battery). The strength of the battery is related to safety performance of a battery product. If the fixing strength is insufficient, disintegration and function failure of the battery module structure may be caused, or even a short-circuit or fire may be caused, harming personal safety.

Fixing methods used for the battery module mainly include: connection and fixation using bolts, namely the end plates and the side plates being fixed by a locking process using bolts; and fixation by welding, namely the end plates and the side plates are fixed by welding and overlapping surface regions of the end plates and the side plates are welded. However, because the bolts are prone to loosening, the connection reliability of battery modules connected by bolts is low during continuous vibration. A battery of which the end plates and the side plates are fixed by welding has a high requirement on assembly of the end plates and the side plates, gaps in the length and width directions are prone to causing poor welding, gaps and warping between the end plates and the side plates cannot be avoided, and weld deviation is prone to causing insufficient connection strength and a poor appearance.

Based on the foregoing considerations, the embodiments of the present application provide a battery module. A first surface is defined on an end plate body, and insertion grooves are formed in an insertion structure formed on the first surface, so that bent parts of side plates of a battery case can be inserted into the insertion grooves, and the connection strength between the end plates and the side plates of the battery case is improved. In addition, the insertion grooves can limit the positions of the bent parts of the side plates, to prevent the bent parts of the side plates from warping and ensure an assembly gap between battery modules.

The end plate disclosed in the embodiments of the present application is applicable to battery modules, batteries using battery modules, and power consuming apparatuses using batteries.

The power consuming apparatus may be, but is not limited to, a mobile phone, a tablet, a laptop, an electric toy, an electric tool, a battery cart, an electric vehicle, a ship, a spacecraft, and the like. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

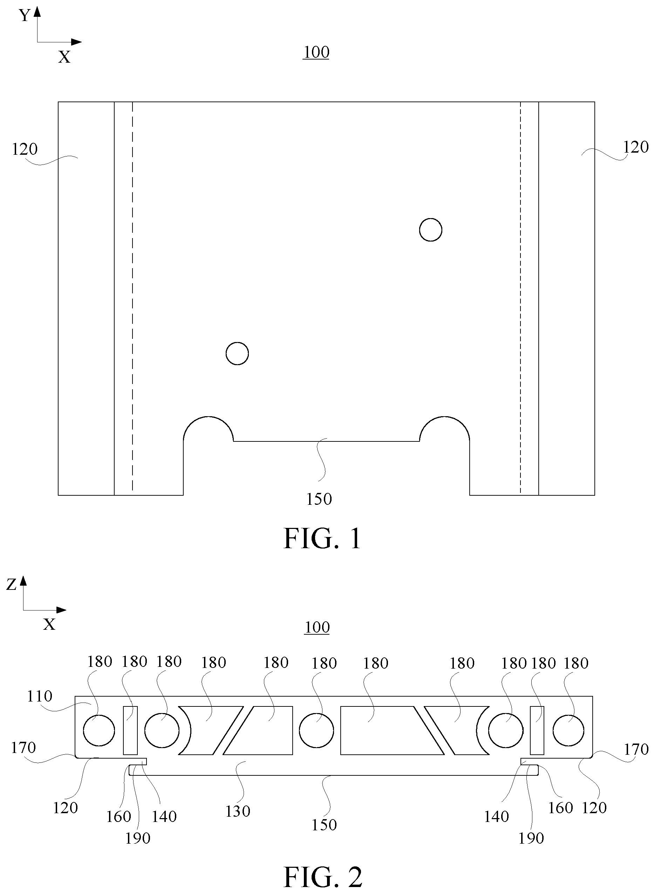

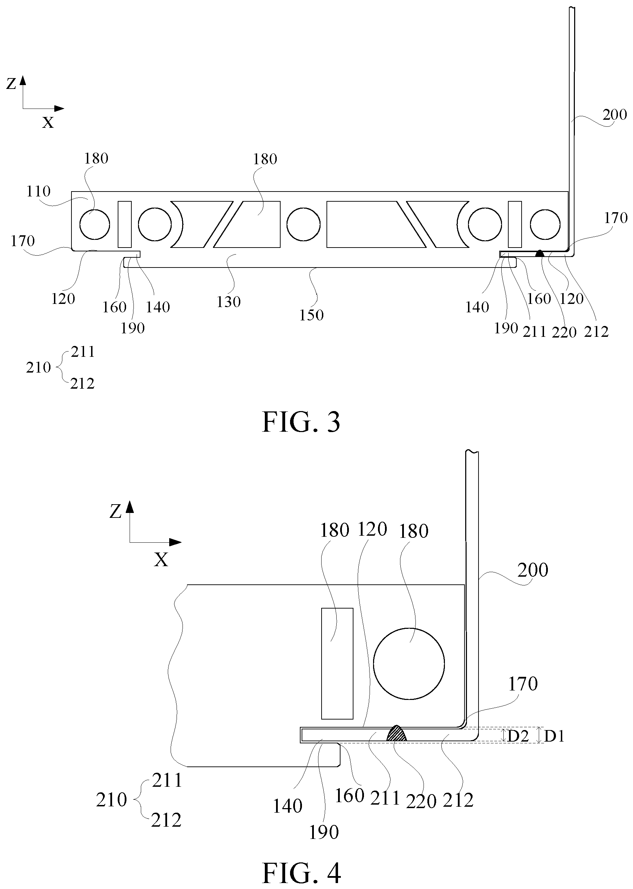

The embodiments of the present application provide a battery module, the battery module including battery cells, end plates, and side plates. FIG. 1 is a schematic diagram of an end plate of a battery module according to some embodiments of the present application; FIG. 2 is a top view of the end plate of the battery module according to some embodiments of the present application; FIG. 3 is a schematic diagram of connection between the end plate and a side plate of the battery module according to some embodiments of the present application; and FIG. 4 is a partially enlarged view of FIG. 3.

As shown in FIG. 1 to FIG. 4, each end plate 100 includes an end plate body 110 and an insertion structure 130. The end plate body 110 defines a first surface 120. The first surface 120 extends along a length direction X and a width direction Y of the end plate 100. The insertion structure 130 is formed on the first surface 120. An insertion grooves 140 is formed in each of two ends of the insertion structure 130 in the length direction X. The insertion grooves 140 extend along the width direction Y. Each side plate 200 includes a bent part 210. The bent part 210 is inserted into the corresponding insertion groove 140.

In the related art, a battery module is typically formed by connecting the end plates 100 and the side plates 200 through a welding process into a case, and securing a plurality of battery cells therein. The battery cells expand and deform during the use. Consequently, a joint between the end plates 100 and the side plates 200, especially the welding seam, bears an excessively large force, causing cracking and failure of the welding seam, or under complex working conditions, especially under composite loads of impact and vibration, causing fatigue cracking at the welding seam due to cyclical and reciprocal stress.

In an example, the case of the battery module may include the end plates 100 and the side plates 200. The number of the side plates 200 may be two, and the number of the end plates 100 may be two. When the case of the battery module is formed, the two side plates 200 are opposite to each other, the two end plates 100 are opposite to each other, and two ends of the end plates 100 are connected to the side plates 200 in a one-to-one correspondence respectively, so as to define an accommodating cavity to contain the battery cells.

In an example, bent parts 210 may be formed at the ends of the side plates 200. The surfaces of the end plates 100 may be covered with the bent parts 210. The ends of the side plates 200 refer to ends of the side plates 200 along the length direction X of the side plates 200. The bent parts 210 may be L-shaped bent parts 210, and are bent toward a direction of the end plate 100. When two ends of the side plates 200 are connected to the end plates 100 respectively, the bent parts 210 may be formed at the two ends of the side plates 200 respectively, so that the side plates 200 integrally form a U-shaped structure. When the end plates 100 are covered with the side plates 200, the bent parts 210 of the side plates 200 overlap the end plates 100. The bent parts 210 and the side plates 200 are of an integral structure. In one example, during preparation, the side plates 200 may be bent by using a bending machine to form the bent parts 210, or may be stamped by using a stamping machine to form the bent parts 210.

In an example, each end plate 100 may include an end plate body 110. The end plate body 110 defines a first surface 120. The first surface 120 extends along a length direction X and a width direction Y of the end plate 100. When the end plates 100 are connected to the side plates 200, the first surfaces 120 of the end plates 100 may be covered with the bent parts 210 of the side plates 200.

In an example, each end plate 100 further includes an insertion structure 130. The insertion structure 130 is formed on the first surface 120. An insertion groove 140 for assembly is formed in each of two ends of the insertion structure 130 in the length direction X. The insertion grooves 140 extend along the width direction Y of the end plate 100. A width of the insertion groove 140 along a thickness direction Z of the end plates 100 may be greater than or equal to a thickness of the bent parts 210 of the side plates 200. A depth of the insertion grooves 140 along the length direction X of the end plates 100 may be less than a dimension of the bent parts 210 of the side plates 200 in the length direction. The insertion grooves 140 may be in any one of rectangular, triangular, polygonal, and other shapes.

In an example, the end plates 100 and the side plates 200 may be assembled by welding following insertion. The side plates 200 and the end plates 100 may be connected by welding after the bent parts 210 of the side plates 200 are inserted into the insertion grooves 140 of the end plates 100.

In the embodiments of the present application, the first surface 120 is defined on the body of the end plate 100, and the insertion grooves 140 are formed in the insertion structure 130 formed on the first surface 120, so that the bent parts 210 of the side plates 200 of the battery case can be inserted into the insertion grooves 140, and the connection strength between the end plates 100 and the side plates 200 of the battery case can be improved. In addition, the insertion grooves 140 can limit the positions of the bent parts 210 of the side plates 200, to prevent the bent parts 210 of the side plates 200 from warping and ensure an assembly gap between battery modules.

For battery modules of the same model, the side plates 200 and the end plates 100 are both standard parts, that is, have the same dimensions. In a process of assembling battery cells into a battery module, if the side plates 200 cannot be inserted into the insertion grooves 140 of the end plates 100, it can be determined that the battery module is poorly assembled. Thus, a module with unacceptable dimensions can be detected in advance at a stage of forming the battery module, and the problem that dimensions are mismatching in assembly in a subsequent process of assembling the battery module into a battery can be avoided.

According to some embodiments of the present application, along a thickness direction Z of the end plate 100, a width of the insertion groove 140 is greater than the sum of a thickness of the bent part 210 of the side plate 200 and a first predetermined value, and is less than the sum of the thickness of the bent part 210 of the side plate 200 and a second predetermined value. The first predetermined value is less than the second predetermined value.

In an example, along the thickness direction Z of the end plate 100, if the width of the insertion groove 140 is less than the thickness of the bent part 210 of the side plate 200, the bent part 210 of the side plate 200 cannot be inserted into the insertion groove 140 formed in the end plate 100. That is, the bent part 210 of the side plate 200 cannot be inserted into or connected with the insertion groove 140 formed in the end plate 100. To enable the bent part 210 of the side plate 200 to be inserted into the insertion groove 140, the width of the insertion groove 140 along the thickness direction Z of the end plate 100 at least needs to be greater than the thickness of the bent part 210.

In an example, the sum of the thickness of the bent part 210 of the side plate 200 and the first predetermined value can represent a relatively small mounting space of the bent part 210 of the side plate 200. When the sum is too small, the mounting space of the bent part 210 of the side plate 200 is too small, and the bent part 210 of the side plate 200 may interfere with the insertion groove 140. The sum of the thickness of the bent part 210 of the side plate 200 and the second predetermined value can represent a relatively large mounting space of the bent part 210 of the side plate 200. When the sum is too large, the mounting space of the bent part 210 of the side plate 200 is too large, and the bent part 210 of the side plate 200 is prone to separating from the insertion groove 140. Therefore, during actual machining, the first predetermined value and the second predetermined value may be properly set by comprehensively considering the mounting space of the bent part 210 of the side plate 200 and whether the bent part 210 is prone to falling off.

In the embodiments of the present application, along the thickness direction Z of the end plate 100, the width of the insertion groove 140 is greater than the sum of the thickness of the bent part 210 of the side plate 200 and the first predetermined value, and is less than the sum of the thickness of the bent part 210 of the side plate 200 and the second predetermined value, so that after the bent part 210 of the side plate 200 is inserted into and assembled with the insertion groove 140, the bent part 210 of the side plate 200 does not interfere with the insertion groove 140, and the bent part 210 of the side plate 200 is not prone to separating from the insertion groove 140.

In some embodiments, the first predetermined value is 0.3 mm, and the second predetermined value is 0.5 mm.

In an example, the first predetermined value and the second predetermined value are both related to the thickness of the side plate 200 of the battery module. In the related art, the side plate 200 has a thickness of 1.0-2.0 mm. That is, the bent part 210 of the side plate 200 generally has a thickness of 1.0-2.0 mm. When the first predetermined value is 0.3 mm, and the second predetermined value is 0.5 mm, the bent part 210 of the side plate 200 does not interfere with the insertion groove 140, and meanwhile, the bent part 210 of the side plate 200 is not prone to separating from the insertion groove 140.

In the embodiments of the present application, the first predetermined value is set to 0.3 mm and the second predetermined value is set to 0.5 mm, so as to further improve a degree of adaption between the bent part 210 of the side plate 200 and the insertion groove 140, and the connection strength between the side plate 200 and the end plate 100 is further improved.

According to some embodiments of the present application, along the length direction X of the end plate 100, a depth of the insertion groove 140 is less than a dimension of the bent part 210 of the side plate 200 in the length direction.

In an example, along the length direction X of the end plate 100, when the depth of the insertion groove 140 is less than or equal to the dimension of the bent part 210 of the side plate 200 in the length direction X, the bent part 210 of the side plate 200 cannot be easily inserted into the insertion groove 140. Therefore, to enable the bent part 210 of the side plate 200 to be more easily inserted into the insertion groove 140, the depth of the insertion groove 140 is less than the dimension of the bent part 210 of the side plate 200 in the length direction X.

In the embodiments of the present application, along the length direction X of the end plate 100, the depth of the insertion groove 140 is less than the dimension of the bent part 210 of the side plate 200 in the length direction X, so that the bent part 210 of the side plate 200 can be inserted into the insertion groove 140 more easily, and an assembly process between the side plate 200 and the end plate 100 is simplified.

In some embodiments, the depth of the insertion groove 140 is equal to 1/5 of the dimension of the bent part 210 of the side plate 200 in the length direction X.

In an example, when the depth of the insertion groove 140 is too large, the difficulty in inserting the bent part 210 of the side plate 200 into the insertion groove 140 may increase. When the depth of the insertion groove 140 is too small, after the bent part 210 of the side plate 200 is inserted into the insertion groove 140, the bent part 210 of the side plate 200 is prone to separating from the insertion groove 140. Therefore, to reduce the difficulty in inserting the bent part 210 of the side plate 200 into the insertion groove 140, and improve the reliability of insertion between the bent part 210 of the side plate 200 and the insertion groove 140, the depth of the insertion groove 140 is equal to 1/5 of the dimension of the bent part 210 of the side plate 200 in the length direction X.

In the embodiments of the present application, the depth of the insertion groove 140 is equal to 1/5 of the dimension of the bent part 210 of the side plate 200 in the length direction X, so that not only can the difficulty in assembling the side plate 200 with the end plate 100 be reduced, but also the connection strength between the side plate 200 and the end plate 100 can be improved.

According to some embodiments of the present application, the insertion structure 130 includes a second surface 150 facing away from the body of the end plate 100. The insertion groove 140 includes a side wall surface 190 facing the first surface 120. A maximum distance between the second surface 150 and the side wall surface 190 is greater than or equal to a predetermined multiple of the thickness of the bent part 210 of the side plate 200.

In an example, a distance between the second surface 150 and the side wall surface 190 is a thickness of a side wall of the insertion groove 140, and the maximum distance between the second surface 150 and the side wall surface 190 is the maximum thickness of the side wall of the insertion groove 140. The side wall of the insertion groove 140 needs to have a certain thickness. When the thickness is too small, the strength and stiffness of the insertion groove 140 are relatively small. Under an external force, the insertion groove 140 may be deformed or damaged, and cannot achieve the function of effectively connecting the end plate 100 to the side plate 200. When the thickness of the side wall of the insertion groove 140 is too large, the thickness of the end plate 100 is increased, and the volume and weight of the end plate 100 may be too large.

In an example, when the battery case is in use, the bent part 210 of the side plate 200 has a force on the side wall surface 190 of the insertion groove 140 along the thickness direction Z of the end plate 100. To improve the structural strength of the insertion groove 140, the distance between the second surface 150 and the side wall surface 190 is associated with the thickness of the bent part 210 of the side plate 200, and the maximum distance between the second surface 150 and the side wall surface 190 is greater than or equal to a predetermined multiple of the thickness of the bent part 210 of the side plate 200. For example, the maximum distance between the second surface 150 and the side wall surface 190 is greater than or equal to 2 times the thickness of the bent part 210 of the side plate 200.

In the embodiments of the present application, the maximum distance between the second surface 150 and the side wall surface 190 of the insertion groove 140 facing the first surface 120 is set to be greater than or equal to the predetermined multiple of the thickness of the bent part 210 of the side plate 200, so that the structural strength of the insertion groove 140 can be improved, and the insertion groove 140 is not prone to deformation.

In some embodiments, the predetermined multiple is 2.

Exemplarily, when the predetermined multiple of the thickness of the bent part 210 of the side plate 200 is too large, the side wall (the maximum distance between the second surface 150 and the side wall surface 190) of the insertion groove 140 may be too thick, which may cause the end plate 100 to be too thick, affect assembly of the end plate 100, and cause the end plate 100 to occupy excessive space. When the predetermined multiple of the thickness of the bent part 210 of the side plate 200 is too small, the side wall (the maximum distance between the second surface 150 and the side wall surface 190) of the insertion groove 140 may be too thin, which may cause the insertion groove 140 to be damaged.

In the embodiments of the present application, the predetermined multiple of the thickness of the bent part 210 of the side plate 200 is set to be 2, so that the structural strength of the insertion groove 140 can be improved, and the end plate 100 does not occupy too much space.

According to some embodiments of the present application, a first chamfer 160 is formed at an end of the side wall surface 190 along the length direction X of the end plate 100.

As shown in FIG. 1 to FIG. 4, the first chamfer 160 is formed at the end of the side wall surface 190, so that the end of the side wall surface 190 has a rounded contour. Therefore, resistance is reduced when the bent part of the side plate 200 is inserted into the insertion groove 140, and the bent part of the side plate 200 is more easily inserted into the insertion groove 140.

In an example, the first chamfer 160 may be an inclined slope chamfer, or may be an arc chamfer.

In the embodiments of the present application, the first chamfer 160 is formed at the end of the side wall surface 190, so that the side plate 200 can be more easily inserted into the insertion groove 140, and the probability of abnormal insertion is reduced.

According to some embodiments of the present application, second chamfers 170 are formed at two ends of the first surface 120 in the length direction X respectively, and a radius of the second chamfers 170 is greater than a bending radius of the bent part 210 of the side plate 200.

In an example, the second chamfer 170 may be an inclined slope chamfer, or may be an arc chamfer. The radius of the second chamfers 170 is greater than the bending radius of the bent part 210 of the side plate 200, so that the bent part 210 closely fits the body of the end plate 100 when connected.

In the embodiments of the present application, the second chamfers 170 are formed at the two ends of the first surface 120 in the length direction X respectively, and the radius of the second chamfers 170 is greater than the bending radius of the bent part 210 of the side plate 200, so that the bent part 210 of the side plate 200 closely fits the body of the end plate 100, and the side plate 200 can be more easily connected to the end plate 100.

According to some embodiments of the present application, a plurality of shaped cavities 180 are formed in the end plate 100.

In an example, the shaped cavities 180 may be divided into connection cavities and weight-reducing cavities. Specifically, the connection cavities may be located at two sides of the end plate 100. The weight-reducing cavities may be located at the middle of the end plate 100.

The connection cavities extend through the end plate 100 in the width direction Y and communicate with connection holes in a base of the battery case, and the connection cavities are provided for an operator to connect the end plate 100 to the base of the battery case. When in use, the end plate 100 may be detachably connected to the base of the battery case by the operator by using a connection bar. The connection bar is inserted in the connection cavity, one end of the connection bar is abutted to a top surface of the end plate 100, and the other end of the connection bar is detachably connected to the connection hole in the base of the battery case.

The weight-reducing cavities are used for reducing the weight of the end plate 100, and the number of the weight-reducing cavities should be not less than the number of the connection cavities. Herein, the weight-reducing cavities may or may not extend through the end plate 100, and the weight-reducing cavities may be in a triangular, rectangular, circular, oval, or any other shape.

In the embodiments of the present application, the plurality of shaped cavities 180 are formed in the end plate 100, so that the weight of the end plate 100 can be reduced, and the end plate can be conveniently connected to the base of the battery case.

According to some embodiments of the present application, the bent part 210 includes a first region 211 and a second region 212 connected to the first region 211. The second region 212 is inserted into the insertion groove 140 formed in the end plate 100. The first region 211 is connected to the first surface 120 of the body of the end plate 100 by welding.

In an example, along the length direction X of the end plate 100, a length of the first region 211 may be greater than a length of the second region 212. The length of the second region 212 may be the same as the depth of the insertion groove 140 formed in the end plate 100.

In an example, the first region 211 and the first surface 120 of the body of the end plate 100 may be connected by a penetration laser welding.

In the embodiments of the present application, by connecting the first region 211 of the bent part 210 to the first surface 120 of the body of the end plate 100 by welding, the first region 211 is completely a weldable region, so that an area of the weldable region can be enlarged, and a welding seam formed in a welding process has high compatibility with deviation or inclination, welded connection is facilitated, and the connection reliability between the side plate 200 and the end plate 100 is improved.

According to some embodiments of the present application, a welding seam 220 extending along the width direction Y of the end plate 100 is formed when the first region 211 is welded to the first surface 120. A dimension of the welding seam 220 is less than a width of the first region 211 along the length direction X of the end plate 100, and the dimension of the welding seam 220 is less than a dimension of the first region 211 along the width direction Y of the end plate 100.

Exemplarily, along the length direction X of the end plate 100, the welding seam 220 may be centrally arranged. The dimension of the welding seam 220 being less than the width of the first region 211 along the length direction X of the end plate 100 means that a process allowance of a certain dimension needs to be reserved in the first region 211 for the welding seam 220. For example, along the length direction X of the end plate 100, 10 mm is reserved at each of the left and right ends of the first region 211. In addition, along the width direction Y of the end plate 100, the welding seam 220 may also be centrally arranged. The dimension of the welding seam 220 being less than the dimension of the first region 211 along the width direction Y of the end plate 100 means that a process allowance of a certain dimension needs to be reserved in the first region 211 for the welding seam 220. For example, along the width direction Y of the end plate 100, 10 mm is reserved at each of two ends of the first region 211.

In the embodiments of the present application, the dimension of the welding seam 220 is less than the width of the first region 211 along the length direction X of the end plate 100, and the dimension of the welding seam 220 is less than the dimension of the first region 211 along the width direction Y of the end plate 100, so that space may be reserved for the welding seam 220 in the length direction X and the width direction Y of the end plate 100, the welding seam 220 may not be higher than the end plate 100 or be wider than the end plate 100, and the probability that the dimensions of the battery case in the length direction X and the width direction Y are increased is reduced.

According to another aspect of the present application, a battery is further provided, including the battery module according to any one of the foregoing embodiments and a case for accommodating the battery module.

In the embodiments of the present application, the battery may be applied to, but not limited to, a mobile phone, a tablet, a laptop, an electric toy, an electric tool, a battery cart, an electric vehicle, a ship, a spacecraft, and the like. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

In an example, in the battery module, a plurality of battery cells may be provided, and the plurality of battery cells may be connected in series, in parallel, or in series and parallel. The series-parallel connection refers to both series connection and parallel connection among the plurality of battery cells. The plurality of battery cells may be directly connected together in series, in parallel, or in series and parallel, and then the battery module formed by the plurality of battery cells may be accommodated in the battery case. Certainly, the plurality of battery cells may also be connected in series, in parallel, or in series and parallel first to form battery modules, and then a plurality of battery modules are connected in series, in parallel, or in series and parallel to form a whole to be accommodated in the battery case. Each battery cell may be a secondary battery or a primary battery, or may be a lithium-ion battery, a sodium-ion battery, or a magnesium-ion battery, but is not limited thereto. The battery cell may be in the shape of a rectangular prism, a cube, a cylinder, or the like.

In an example, the battery may include a plurality of battery modules that are stacked on each other and a battery case.

In the embodiments of the present application, by using the battery in the embodiments of the present application, an assembly gap between the battery modules is ensured, and the stability of the battery is improved.

According to another aspect of the present application, a power consuming apparatus is further provided, including the battery according to the foregoing embodiment. The battery is used for providing electric energy.

In the embodiments of the present application, the power consuming apparatus may be, but is not limited to, a mobile phone, a tablet, a laptop, an electric toy, an electric tool, a battery cart, an electric vehicle, a ship, a spacecraft, and the like. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

In the embodiments of the present application, by using the power consuming apparatus in the embodiments of the present application, an assembly gap between the battery modules is ensured, the stability of the battery is improved, and thus the reliability of the power consuming apparatus is improved.

The technical solutions of the present application are further described below through a specific embodiment, as shown in FIG. 1 to FIG. 4.

A battery module includes battery cells, end plates 100, and side plates 200. Each end plate 100 includes an end plate body 110 and an insertion structure 130. The end plate body 110 defines a first surface 120. The first surface 120 extends along a length direction X and a width direction Y of the end plate 100. The insertion structure 130 is formed on the first surface 120. An insertion groove 140 is formed in each of two ends of the insertion structure 130 in the length direction X. The insertion groove 140 extends along the width direction Y. Each side plate 200 includes a bent part 210. The bent part 210 is inserted into the corresponding insertion groove 140.

Along a thickness direction Z of the end plate 100, a width D1 of the insertion groove 140 is greater than the sum of a thickness D2 of the bent part 210 of the side plate 200 and a first predetermined value, and is less than the sum of the thickness of the bent part 210 of the side plate 200 and a second predetermined value, and the first predetermined value is less than the second predetermined value. The first predetermined value is 0.3 mm, and the second predetermined value is 0.5 mm.

Along the length direction X of the end plate 100, a depth of the insertion groove 140 is less than 1/5 of a dimension of the bent part 210 of the side plate 200 in the length direction X. A first chamfer 160 is formed at an end of a side wall surface 190 along the length direction X of the end plate 100. Second chamfers 170 are formed at two ends of the first surface 120 in the length direction X respectively, and a radius of the second chamfers 170 is greater than a bending radius of the bent part 210 of the side plate 200.

The insertion structure 130 includes a second surface 150 facing away from the body of the end plate 100. The insertion groove 140 includes the side wall surface 190 facing the first surface 120. The maximum distance between the second surface 150 and the side wall surface 190 is greater than or equal to 2 times the thickness of the bent part 210 of the side plate 200.

A plurality of shaped cavities 180 are formed in the end plate 100.

Finally, it should be noted that the foregoing embodiments are only used to illustrate the technical solutions of the present application, rather than limiting the present application. Although the present application has been described in detail with reference to the foregoing embodiments, those of ordinary skill in the art should understand that the technical solutions described in the foregoing embodiments can still be modified or some or all of the technical features thereof can be equivalently substituted. However, these modifications or substitutions do not depart the essence of the corresponding technical solutions from the scope of the technical solutions of the embodiments of the present application, and should be covered in the scope of the claims and specification of the present application. In particular, the technical features mentioned in the embodiments can be combined in any way provided that there is no structural conflict. The present application is not limited to the specific embodiments disclosed herein, but includes all technical solutions that fall within the scope of the claims.

## Claims

1. A battery module, comprising a battery cell, an end plate (100), and a side plate (200), wherein the end plate (100) comprises:
an end plate body (110), the end plate body (110) defining a first surface (120), and the first surface (120) extending along a length direction (X) and a width direction (Y) of the end plate (100); and
an insertion structure (130), the insertion structure (130) being formed on the first surface (120), an insertion groove (140) being formed in each of two ends of the insertion structure (130) in the length direction (X), and the insertion groove (140) extending along the width direction (Y); and
the side plate (200) comprises a bent part (210), the bent part (210) being inserted into the insertion groove (140).

2. The battery module according to claim 1, wherein along a thickness direction (Z) of the end plate (100), a width of the insertion groove (140) is greater than a sum of a thickness of the bent part (210) of the side plate (200) and a first predetermined value, and is less than a sum of the thickness of the bent part (210) of the side plate (200) and a second predetermined value, and the first predetermined value is less than the second predetermined value.

3. The battery module according to claim 1 or 2, wherein along the length direction (X) of the end plate (100), a depth of the insertion groove (140) is less than a dimension of the bent part (210) of the side plate (200) in the length direction (X).

4. The battery module according to any one of claims 1 to 3, wherein the insertion structure (130) comprises a second surface (150) facing away from the end plate body (110), the insertion groove (140) comprises a side wall surface (190) facing the first surface (120), and a maximum distance between the second surface (150) and the side wall surface (190) is greater than or equal to a predetermined multiple of the thickness of the bent part (210) of the side plate (200).

5. The battery module according to any one of claims 1 to 4, wherein a first chamfer (160) is formed at an end of the side wall surface (190) along the length direction (X) of the end plate (100).

6. The battery module according to any one of claims 1 to 5, wherein a second chamfer (170) is formed at each of two ends of the first surface (120) in the length direction (X), and a radius of the second chamfers (170) is greater than a bending radius of the bent part (210) of the side plate (200).

7. The battery module according to any one of claims 1 to 6, wherein a plurality of shaped cavities (180) are formed in the end plate body (110).

8. The battery module according to any one of claims 1 to 7, wherein the bent part (210) comprises a first region (211) and a second region (212) connected to the first region (211), the second region (212) is inserted into the insertion groove (140) formed in the end plate (100), and the first region (211) is connected to the first surface (120) of the end plate body (110) by welding.

9. The battery module according to claim 8, wherein a welding seam (220) extending along the width direction (Y) of the end plate (100) is formed when the first region is welded to the first surface (120), wherein a dimension of the welding seam is less than a width of the first region along the length direction (X) of the end plate (100), and the dimension of the welding seam (220) is less than a dimension of the first region (211) along the width direction (Y) of the end plate (100).

10. A battery, comprising the battery module according to any one of claims 1 to 9 and a case for accommodating the battery module.

11. A power consuming apparatus, comprising the battery according to claim 10, wherein the battery is used for providing electric energy.
